# EUROPEAN PATENT APPLICATION

(11) **EP 2 149 881 A1**
(43) Date of publication of application: **03.02.2010**
(21) Application number: 09166663.6
(22) Date of filing: 29.07.2009
(51) Int. Cl.: G11B 20/10, G11B 20/14

(54) **Signal processing device**

(30) Priority: 30.07.2008 JP 2008196017
(71) Applicant: Funai Electric Co., Ltd., Daito-shi, Osaka 574-0013 (JP)
(72) Inventor: Yoshioka, Shinji, Daito-shi, Osaka 574-0013 (JP)
(74) Representative: Grünecker, Kinkeldey, Stockmair & Schwanhäusser Anwaltssozietät

(57) **Abstract**

An AV amplifier (signal processing device) (100) includes a DSP (1) that performs predetermined processing on a digital audio signal inputted thereto, a D/A converter (2) that converts the digital audio signal into an analog audio signal, and a controller (4) that sets a clock frequency of the DSP (1) in accordance with a predetermined sampling frequency at the time of turn-on. Upon reception of a digital audio signal having a sampling frequency which is different from the clock frequency, the DSP (1) adds a silent signal corresponding to a predetermined time to a head of the digital audio signal inputted thereto.

## Description

### Technical Field

The present invention relates to a signal processing device that includes a signal processor for performing predetermined processing on a digital audio signal inputted thereto.

### Background Art

Conventionally, there has been known a radio receiver including: an audio DSP (Digital Signal Processor) that performs predetermined processing on audio data inputted thereto; and a D/A converter that performs digital-to-analog conversion on the audio data subjected to the predetermined processing in the audio DSP (refer to, e.g., Patent Literature 1). In this radio receiver, an operating clock of the audio DSP is changed in accordance with a sampling frequency of audio data to be inputted to the audio DSP.

Conventionally, there has also been known a disc recording/reproducing apparatus in which a default frequency of a clock for reproduction is set at 48 kHz (refer to, e.g., Patent Literature 2). In this disc recording/reproducing apparatus, when the default frequency of the clock for reproduction is different from a sampling frequency of an audio signal to be reproduced, a frequency of the clock for reproduction is changed to be equal to the sampling frequency of the audio signal. More specifically, when the sampling frequency of the audio signal to be reproduced is 44.1 kHz, the frequency of the clock for reproduction is changed from 48 kHz to 44.1 kHz.

However, the radio receiver disclosed in Patent Literature 1 has a problem that noise is generated at the time when the operating clock of the audio DSP is changed. As in the case of the radio receiver disclosed in Patent Literature 1, the disc recording/reproducing apparatus disclosed in Patent Literature 2 has a problem that noise is generated at the time when the frequency of the clock for reproduction is changed. In order to solve the problems described above, conventionally, there have been proposed various signal processing devices (refer to, e.g., Patent Literatures 3 and 4).

Patent Literature 3 discloses an optical disc device (signal processing device) including an audio processor that mutes a sound during a predetermined period when audio attribute information (sampling frequency) of audio data inputted thereto is changed. According to this optical disc device, the setting for the audio processor is changed during the predetermined period that the sound is muted. Therefore, the optical disc device can suppress generation of noise at the time when the setting for the audio processor is changed.

Patent Literature 4 discloses a signal processing device including an acoustic corrector that performs predetermined processing on a digital audio signal and a sampling rate converter that converts a sampling frequency of the digital audio signal inputted to the acoustic corrector into a predetermined sampling frequency. According to this signal processing device, the sampling rate converter converts the sampling frequency of the digital audio signal inputted to the acoustic corrector into the predetermined sampling frequency, thereby changing a setting for the acoustic corrector is not required. Therefore, the signal processing device can suppress generation of noise at the time when the setting for the acoustic corrector is changed.

Conventionally, there has also been known an S/PDIF (Sony/Philips Digital Interface) signal receiving circuit capable of identifying a transfer rate of an S/PDIF signal (refer to, e.g., Patent Literature 5).

### Citation List

### Patent Literature

Patent Literature 1: Japanese Laid-Open Patent Publication No. 2005-141873
Patent Literature 2: Japanese Patent No. 4062425
Patent Literature 3: Japanese Laid-Open Patent Publication No. 2007-193863
Patent Literature 4: Japanese Laid-Open Patent Publication No. 2005-166188
Patent Literature 5: Japanese Laid-Open Patent Publication No. 2001-251284

### Summary of Invention

### Technical Problems

In the optical disc device (signal processing device) disclosed in Patent Literature 3, it is possible to suppress generation of the noise by muting the sound during the predetermined period, whereas the sound during this predetermined period is interrupted. Consequently, the optical disc device fails to reproduce a leading portion of audio data.

In the signal processing device disclosed in Patent Literature 4, it is possible to suppress generation of the noise, whereas additional provision of the sampling rate converter is required, resulting in complication of a circuit configuration.

The S/PDIF signal receiving circuit of Patent Literature 5 does not disclose nor suggest the configuration of suppressing generation of noise at the time when the setting for the signal processor is changed.

The present invention has been devised to solve the problems described above, and an object thereof is to provide a signal processing device capable of suppressing generation of noise at the time when the setting for a signal processor is changed, suppressing interruption of a leading portion of a sound and suppressing complication of a circuit configuration.

### Solution to Problems

A signal processing device according to the present invention includes: a signal processor that receives a digital audio signal and performs predetermined processing on the digital audio signal; and a D/A converter that converts the digital audio signal subjected to the predetermined processing in the signal processor into an analog audio signal. The signal processing device further includes a controller that sets the signal processor in accordance with a predetermined sampling frequency at the time of turn-on. Upon reception of a digital audio signal having a sampling frequency which is different from the predetermined sampling frequency, the signal processor adds a silent signal corresponding to a predetermined time to a head of the digital audio signal inputted thereto.

With this configuration, by adding the silent signal corresponding to a predetermined time to a head of the inputted digital audio signal, the controller changes the setting for the signal processor during a period that the silent signal is reproduced. Therefore, it is possible to suppress generation of noise at the time when the setting for the signal processor is changed. Moreover, the signal processing device according to the present invention adds the silent signal corresponding to the predetermined time to the digital audio signal inputted thereto to suppress interruption of a leading portion of a sound, unlike the case where a sound is muted as disclosed in Patent Literature 3. Further, the signal processing device according to the present invention does not require a sampling rate converter additionally, unlike Patent Literature 4. Therefore, it is possible to suppress complication of a circuit configuration. In the signal processing device according to the present invention, the signal processor is set in accordance with the predetermined sampling frequency at the time of turn-on. Therefore, when a digital audio signal having the predetermined sampling frequency is inputted, it is not necessary to change the setting for the signal processor. In this case, accordingly, the signal processor adds no silent signal to the digital audio signal inputted thereto, so that a sound based on the digital audio signal is reproduced as it is. Thus, it is possible to suppress reproduction of the silent signal corresponding to the predetermined time as well as suppress interruption of a leading portion of the sound and generation of noise.

In the above signal processing device, preferably, when the signal processor receives the digital audio signal having the sampling frequency different from the predetermined sampling frequency, the controller sets the signal processor in accordance with the sampling frequency of the digital audio signal inputted to the signal processor.

With this configuration, by setting even in a case of receiving a digital audio signal having a sampling frequency which is different from the predetermined sampling frequency, the signal processing device can reproduce the digital audio signal properly.

In the above signal processing device, preferably, the controller changes the predetermined sampling frequency based on usage history.

With this configuration, by setting the signal processor in accordance with a sampling frequency which is used frequently at the time of turn-on, a possibility that the setting for the signal processor is changed can be reduced. Therefore, a possibility that a silent signal corresponding to a predetermined time is reproduced can be reduced.

In the above signal processing device, preferably, in a case where the signal processor receives a plurality of digital audio signals, and the digital audio signal inputted thereto firstly is different in sampling frequency from the digital audio signal inputted thereto subsequently, the signal processor adds the silent signal corresponding to the predetermined time to a head of the digital audio signal inputted subsequently.

With this configuration, even in a case of receiving a plurality of digital audio signals which are different in sampling frequency from one another, it is possible to suppress generation of noise as well as suppress interruption of a leading portion of a sound.

### Advantageous Effects of Invention

The present invention allows provision of a signal processing device capable of suppressing generation of noise at the time when the setting for the signal processor is changed, interruption of a leading portion of a sound, and complication of a circuit configuration.

### Brief Description of Drawings

Fig. 1 is a block diagram showing a general configuration of an AV amplifier according to one embodiment of the present invention; and
Fig. 2 is a flowchart for describing operations of the AV amplifier according to the embodiment of the present invention.

### Description of Embodiments

With reference to the drawings, hereinafter, preferred embodiments of the present invention will be described. In the following description, the present invention is applied to an AV amplifier which is one example of a signal processing device.

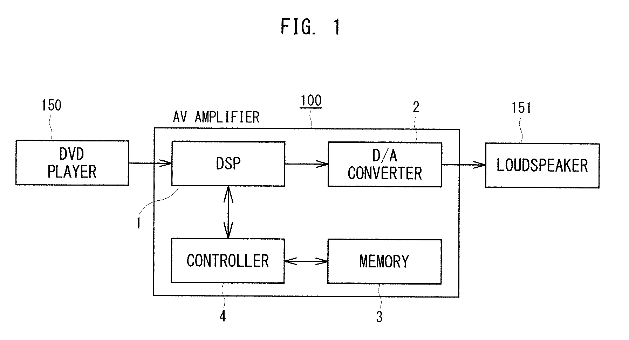

Fig. 1 is a block diagram showing a general configuration of an AV amplifier according to one embodiment of the present invention. With reference to Fig. 1, the configuration of the AV amplifier 100 according to this embodiment will be described.

As shown in Fig. 1, the AV amplifier 100 according to the embodiment of the present invention is connected with a DVD player 150 and a loudspeaker 151. The AV amplifier 100 receives a digital audio signal based on the S/PDIF (Sony/Philips Digital Interface) standard from the DVD player 150. Further, the AV amplifier 100 converts this digital audio signal, which is received from the DVD player 150, into an analog audio signal to be outputted to the loudspeaker 151.

The AV amplifier 100 includes a DSP (Digital Signal Processor) 1 that performs predetermined processing on a digital audio signal, a D/A converter 2 that converts the digital audio signal into an analog audio signal, a memory 3 such as a flash memory or an EEPROM, and a controller 4 that controls operations of the AV amplifier 100. The DSP 1 is one example of a "signal processor" according to the present invention.

The DSP 1 receives a digital audio signal from the DVD player 150, performs predetermined processing such as decoding and error correction on the digital audio signal, and outputs the digital audio signal subjected to the predetermined processing to the D/A converter 2. Moreover, the DSP 1 has a function of identifying a sampling frequency of the digital audio signal inputted thereto from the DVD player 150 and outputting the identified sampling frequency of the digital audio signal to the controller 4.

In the DSP 1, a clock frequency is set by the controller 4. When a sampling frequency of a digital audio signal received from the DVD player 150 is different from this clock frequency, the DSP 1 adds a silent signal corresponding to a predetermined time (e.g., one second) to a head of the digital audio signal inputted thereto.

The D/A converter 2 has a function of converting the digital audio signal inputted thereto from the DSP 1 into an analog audio signal and outputting the analog audio signal to the loudspeaker 151. The memory 3 stores a predetermined sampling frequency which is changed based on usage history. Specifically, the memory 3 stores, as the predetermined sampling frequency, a sampling frequency of a digital audio signal inputted most frequently to the AV amplifier 100 during a preceding operation of the AV amplifier 100. An initial value of the predetermined sampling frequency is 48 kHz, for example.

In this embodiment, the controller 4 includes a CPU, a ROM and a RAM. At the time of turn-on of the AV amplifier 100, the controller 4 sets the clock frequency of the DSP 1 in accordance with the predetermined sampling frequency. Specifically, at the time of turn-on of the AV amplifier 100, the controller 4 sets a value of the clock frequency of the DSP 1 to be equal to that of the predetermined sampling frequency.

Also in this embodiment, when a sampling frequency of a digital audio signal inputted to the DSP 1 is different from the clock frequency of the DSP 1, the controller 4 sets the value of the clock frequency of the DSP 1 to be equal to that of the sampling frequency of the digital audio signal inputted to the DSP 1.

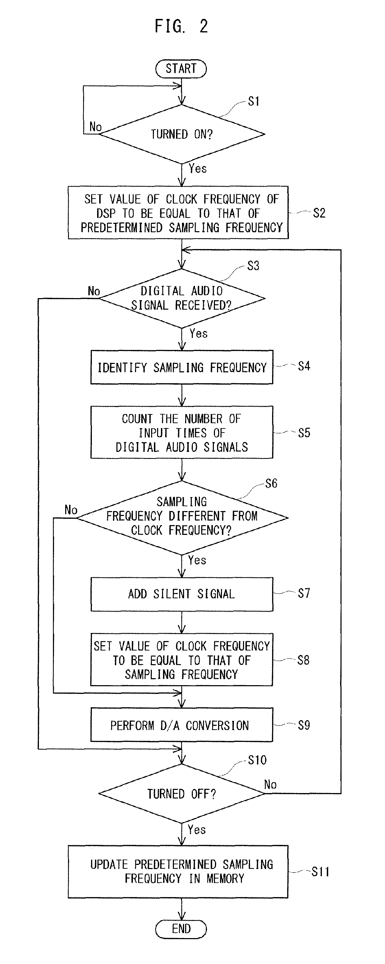

Fig. 2 is a flowchart for describing the operations of the AV amplifier according to the embodiment of the present invention. With reference to Figs. 1 and 2, hereinafter, the operations of the AV amplifier 100 according to this embodiment will be described.

In step S1 (see Fig. 2), first, the controller 4 (see Fig. 1) of the AV amplifier 100 (see Fig. 1) determines whether the AV amplifier 100 is turned on. When the controller 4 determines that the AV amplifier 100 is turned on, the operating procedure proceeds to step S2. On the other hand, when the controller 4 determines that the AV amplifier 100 is not turned on, the operation in step S1 is executed repeatedly.

In step S2, next, the controller 4 sets the clock frequency of the DSP 1 (see Fig. 1). Specifically, the controller 4 sets the value of the clock frequency of the DSP 1 to be equal to that of the predetermined sampling frequency stored in the memory 3 (see Fig. 1). For example, when the predetermined sampling frequency is 48 kHz, the controller 4 sets the clock frequency of the DSP 1 at 48 kHz.

In step S3, next, the DSP 1 determines whether a digital audio signal based on the S/PDIF standard is inputted thereto from the DVD player 150 (see Fig. 1). When the DSP 1 determines that the digital audio signal is inputted, the operating procedure proceeds to step S4. On the other hand, when the DSP 1 determines that no digital audio signal is inputted, the operating procedure proceeds to step S10.

In step S4, next, the DSP 1 identifies a sampling frequency of the digital audio signal inputted thereto. Then, the DSP 1 outputs the sampling frequency of the digital audio signal to the controller 4. In step S5, next, the controller 4 counts the number of input times of the digital audio signal having the identified sampling frequency.

In step S6, next, the controller 4 determines whether the sampling frequency of the digital audio signal inputted to the DSP 1 is different from the clock frequency of the DSP 1. When the controller 4 determines that the sampling frequency is different from the clock frequency, the operating procedure proceeds to step S7. On the other hand, when the controller 4 determines that the sampling frequency is equal to the clock frequency, the operating procedure proceeds to step S9.

In step S7, next, the DSP 1 adds a silent signal corresponding to a predetermined time (e.g., one second) to a head of the digital audio signal inputted thereto. In step S8, next, the controller 4 sets the value of the clock frequency of the DSP 1 to be equal to that of the sampling frequency of the digital audio signal inputted to the DSP 1. For example, in a case where the sampling frequency of the digital audio signal inputted to the DSP 1 is 44.1 kHz and the clock frequency of the DSP 1 is 48 kHz, the controller 4 changes the clock frequency of the DSP 1 to 44.1 kHz.

In step S9, next, the DSP 1 performs the predetermined processing on the digital audio signal and outputs the digital audio signal subjected to the predetermined processing to the D/A converter 2 (see Fig. 1). Then, the D/A converter 2 converts the digital audio signal into an analog audio signal and outputs the analog audio signal to the loudspeaker 151 (see Fig. 1). Thus, when the sampling frequency is equal to the clock frequency ("No" in step S6), the loudspeaker 151 reproduces only a sound based on the digital audio signal inputted to the AV amplifier 100. On the other hand, when the sampling frequency is different from the clock frequency ("Yes" in step S6) and the silent signal is added to the digital audio signal (step S7), the loudspeaker 151 reproduces a sound based on the silent signal corresponding to the predetermined time (e.g., one second) and then reproduces the sound based on the digital audio signal inputted to the AV amplifier 100.

In step S10, next, the controller 4 determines whether the AV amplifier 100 is turned off. When the controller 4 determines that the AV amplifier 100 is turned off, the operating procedure proceeds to step S11. On the other hand, when the controller 4 determines that the AV amplifier 100 is not turned off, the operating procedure returns to step S3.

In step S11, next, the controller 4 updates the predetermined sampling frequency stored in the memory 3. Specifically, the controller 4 allows the memory 3 to store, as the predetermined sampling frequency, a sampling frequency of a digital audio signal inputted most frequently to the DSP 1, based on a result of the count in step S5. For example, when the DSP 1 receives the digital audio signal having a sampling frequency of 44.1 kHz one time and receives the digital audio signals having a sampling frequency of 48 kHz two times, the memory 3 stores the value of 48 kHz as the predetermined sampling frequency. Thereafter, the operations of the AV amplifier 100 are terminated.

According to this embodiment, as described above, in the case where the sampling frequency of the digital audio signal inputted to the DSP 1 is different from the clock frequency of the DSP 1 ("Yes" in step S6), the DSP 1 adds the silent signal corresponding to the predetermined time (e.g., one second) to the head of the digital audio signal (step S7), thereby the sound based on the silent signal corresponding to the predetermined time is reproduced in advance and then the sound based on the digital audio signal is reproduced (step S9). In this case, accordingly, the clock of the DSP 1 becomes stable during reproduction of the silent signal corresponding to the predetermined time. Therefore, the AV amplifier 100 can suppress generation of noise at the time when the clock frequency of the DSP 1 is changed.

According to this embodiment, the DSP 1 adds the silent signal corresponding to the predetermined time to the digital audio signal inputted thereto (step S7), unlike the case where a sound is muted as disclosed in Patent Literature 3. Therefore, it is possible to suppress interruption of the leading portion of the sound.

According to this embodiment, the AV amplifier 100 does not require a sampling rate converter additionally, unlike Patent Literature 4. Therefore, it is possible to suppress complication of a circuit configuration.

According to this embodiment, the value of the clock frequency of the DSP 1 is set to be equal to that of the predetermined sampling frequency, at the time of turn-on. Therefore, when a digital audio signal having the predetermined sampling frequency is inputted ("No" in step S6), it is not necessary to change the clock frequency of the DSP 1. In this case, accordingly, the DSP 1 adds no silent signal to the digital audio signal inputted thereto, so that a sound based on the digital audio signal inputted thereto is produced as it is (step S9). Thus, it is possible to suppress reproduction of the silent signal corresponding to the predetermined time as well as suppress interruption of a leading portion of the sound and generation of noise.

According to this embodiment, in the case where the sampling frequency of the digital audio signal inputted to the DSP 1 is different from the clock frequency of the DSP 1 ("Yes" in step S6), the controller 4 changes the value of the clock frequency of the DSP 1 to be equal to that of the sampling frequency of the inputted digital audio signal (step S8). Thus, even in a case of receiving a digital audio signal having a sampling frequency which is different from the clock frequency of the DSP 1, the AV amplifier 100 can reproduce the digital audio signal properly.

According to this embodiment, the predetermined sampling frequency corresponds to a sampling frequency of a digital audio signal inputted most frequently to the AV amplifier 100 during a preceding operation of the AV amplifier 100. Thus, by setting the value of the clock frequency of the DSP 1 to be equal to that of the predetermined sampling frequency (step S2), the AV amplifier 100 can reduce a possibility that the clock frequency of the DSP 1 is changed upon reception of the digital audio signal. Therefore, the AV amplifier 100 can reduce a possibility that a silent signal corresponding to a predetermined time is reproduced.

According to this embodiment, while the AV amplifier 100 is being turned on ("No" in step S10), the operations in steps S3 to S9 are executed repeatedly. Therefore, even in a case of receiving a plurality of digital audio signals which are different in sampling frequency from one another, the AV amplifier 100 can suppress generation of noise as well as interruption of a leading portion of a sound. Moreover, in a case of receiving a plurality of digital audio signals which are equal in sampling frequency to one another, the AV amplifier 100 can suppress reproduction of a silent signal corresponding to a predetermined time as well as suppress interruption of a leading portion of a sound and generation of noise.

The present invention may be modified variously in addition to the foregoing embodiment. In the foregoing embodiment, the present invention is applied to the AV amplifier 100 which is one example of the signal processing device. However, the present invention is not limited thereto. For example, the signal processing device according to the present invention may be incorporated in the DVD player 150. Alternatively, the signal processing device according to the present invention may be incorporated in the loudspeaker 151.

In the foregoing embodiment, the DVD player 150 that outputs a digital audio signal is connected to the AV amplifier 100. However, the present invention is not limited thereto. For example, another signal output device (not shown) such as a CD player or a digital media server that outputs a digital audio signal may be connected to the AV amplifier 100.

In the foregoing embodiment, the predetermined sampling frequency stored in the memory 3 is changed based on usage history. However, the present invention is not limited thereto. For example, the predetermined sampling frequency stored in the memory 3 may be fixed (e.g., 48 kHz).

In the foregoing embodiment, the memory 3 stores, as the predetermined sampling frequency, a sampling frequency of a digital audio signal inputted most frequently to the AV amplifier 100 during a preceding operation of the AV amplifier 100. However, the present invention is not limited thereto. For example, the memory 3 may store, as the predetermined sampling frequency, a sampling frequency of a digital audio signal inputted most frequently to the AV amplifier 100 in total.

In the foregoing embodiment, after the silent signal is added to the digital audio signal, the value of the clock frequency is set to be equal to that of the sampling frequency. However, the present invention is not limited thereto. For example, the silent signal may be added to the digital audio signal after the value of the clock frequency is set to be equal to that of the sampling frequency.

### Reference Signs List

1 DSP (signal processor)
2 D/A converter
4 Controller
100 AV amplifier (signal processing device)

## Claims

**1.**
A signal processing device (100) comprising:
a signal processor (1) that receives a digital audio signal and performs predetermined processing on the digital audio signal; and
a D/A converter (2) that converts the digital audio signal subjected to the predetermined processing in the signal processor (1) into an analog audio signal; **characterized in that**
the signal processing device (100) further comprising a controller (4) that sets the signal processor (1) in accordance with a predetermined sampling frequency at the time of turn-on, and
upon reception of a digital audio signal having a sampling frequency which is different from the predetermined sampling frequency, the signal processor (1) adds a silent signal corresponding to a predetermined time to a head of the digital audio signal inputted thereto.

**2.**
The signal processing device (100) according to claim 1, wherein
when the signal processor (1) receives the digital audio signal having the sampling frequency different from the predetermined sampling frequency, the controller (4) sets the signal processor (1) in accordance with the sampling frequency of the digital audio signal inputted to the signal processor (1).

**3.**
The signal processing device (100) according to claim 1 or 2, wherein
the controller (4) changes the predetermined sampling frequency, based on usage history.

**4.**
The signal processing device (100) according to any one of claims 1 to 3, wherein
in a case where the signal processor (1) receives a plurality of digital audio signals, and the digital audio signal inputted thereto firstly is different in sampling frequency from the digital audio signal inputted thereto subsequently, the signal processor (1) adds the silent signal corresponding to the predetermined time to a head of the digital audio signal inputted subsequently.
